# EUROPÄISCHE PATENTSCHRIFT

(11) **EP 2 626 498 B1**
(45) Veröffentlichungstag und Bekanntmachung des Hinweises auf die Patenterteilung: **18.01.2017**
(21) Anmeldenummer: 12002037.5
(22) Anmeldetag: 22.03.2012
(51) Int. Cl.: E06B 3/82, C08H 8/00, B27K 3/34, E06B 3/70

(54) **Türrohling mit acetyliertem Holz und Tür umfassend einen solchen Türrohling**
Door blank with acetylated wood and door comprising such a door blank
Ébauche de porte avec bois acétylé et porte comportant une telle ébauche

(30) Priorität: 10.02.2012 DE 202012001409 U
(43) Veröffentlichungstag der Anmeldung: 14.08.2013
(73) Patentinhaber: Haustüren-Ring GmbH, 93345 Hausen/Herrnwalthann (DE)
(72) Erfinder: Zizlsperger, Alfons, 93345 Herrnwahlthann (DE)
(74) Vertreter: Graf von Stosch, Andreas

(56) Entgegenhaltungen:
- US-A1- 2005 285 490
- US-A1- 2006 010 793
- US-A1- 2010 331 531

## Beschreibung

Die Erfindung betrifft einen Türrohling, insbesondere einen Rohling für eine Haustür, mit acetyliertem Holz, sowie eine aus einem solchen Türrohling gefertigte Tür.

Der Werkstoff Holz wird nicht nur im Innenbereich, sondern häufig auch im Außenbereich eingesetzt. Je nach den dort vorherrschenden Witterungsbedingungen ist das Holz, bzw. der daraus gefertigte Gegenstand, dabei mitunter extremen Temperatur- und/oder Feuchtigkeitsschwankungen ausgesetzt. Dies trifft im besonderen Maß auf Außentüren zu, deren bewitterte Außenseiten zudem häufig ganz anderen klimatischen Bedingungen ausgesetzt sind, als ihre Innenseiten. Das in solchen Türen verwendete Holz ist daher häufig nicht in der Lage, diesen extremen Umwelteinflüssen bzw. -schwankungen lange Stand zu halten. Selbst bei teueren tropischen Harthölzer kann es zu einem nicht zu vernachlässigen Quellen und Schwinden des Holzes kommen. Der Hauptgrund hierfür liegt darin, dass Holz eine große Menge chemischer Gruppen enthält, die sogenannten "freien Hydroxyle", wobei abhängig von den jeweiligen klimatischen Bedingungen, denen das Holz ausgesetzt ist, diese freien Hydroxylgruppen Wasser absorbieren oder abgeben.

Um Hölzer gegenüber solchen Witterungseinflüssen haltbarer zu machen, ist es in der Fachwelt schon seit Längerem bekannt, Hölzer zu "acetylieren". Im Verlauf der Acetylierung werden die freien Hydroxyle zu Acetylgruppen umgewandelt, indem im Holz eine Reaktion mit Essigsäureanhydrid herbeigeführt wird. Sind die freien Hydroxylgruppen zu Acetylgruppen umgewandelt, wird die Fähigkeit des Holzes zur Absorbierung von Wasser wesentlich verringert. Die Folge hiervon ist, dass das Holz eine deutlich höhere Maßhaltigkeit aufweist. Zudem wird vermutet, dass durch die Acetylierung die Verdauung des Holzes durch Enzyme reduziert werden kann, so dass das Holz weniger schnell morsch wird.

Acetylierte Massivhölzer werden z.B. von der Firma Enno Roggemann GmbH & Co. KG unter der Markenbezeichnung "ACCOYA" vertrieben. Ferner werden acetylierte MDF-. Pressplatten von der gleichen Firma unter der Markenzeichnung " TRICOYA" vertrieben. Die Verwendung von acetylierten Hölzern zur Herstellung von Türen ist bereits bekannt.

Die Herstellung von actyliertem Holz ist jedoch relativ aufwändig und der Werkstoff somit entsprechend kostspielig.

US 2006/0010793 A1 offenbart eine Tür mit einem peripheren Türrahmen und zwei auf dem Rahmen aufgebrachten Deckplatten. Der Rahmen besteht dabei aus zwei Längs- und zwei Querbalken. Die Deckplatten bestehen dabei aus Holzfaserharzkomposit oder aus thermoplastischem Kompositmaterial, wie z.B. Fiberglasmaterial.

US 2006/010793 A1 offenbart dabei die folgenden Merkmale des Anspruchs 1, eine Tür, umfassend einen Türrohling umfassend: - einen Rahmen, der sich um einen wesentlichen Umfang des Türrohlings herum erstreckt, und der Rahmen des Türrohlings, zumindest abschnittsweise, Holz aufweist, - wobei der Rahmen eine Mehrzahl von länglichen Elementen umfasst, welche sich um einen Hohlraum, geeignet für den Kern herum erstrecken und damit den Umfang des Türrohlings im Wesentlichen definieren, sowie eine Vorderseiten-Deckplatte, welche sich im Wesentlichen über die gesamte Vorderseite des Türrohlings erstreckt, oder/ und eine Rückseiten-Deckplatte, welche sich im Wesentlichen über die gesamte Rückseite des Türrohlings erstreckt.

US 2010/0331531 A1 offenbart ein acetyliertes lignocellulosisches Material mit einer Dichte zwischen 0,45 g und 0,6 g (basierend auf dem Trockengewicht). Gemäß US 2010/0331531 A1 kann dieses Material Verwendung in der Herstellung von Türen finden.

Es ist daher Aufgabe der vorliegenden Erfindung, einen verbesserten Türrohling bereitzustellen, welcher relativ kostengünstig produziert werden kann und welcher zur Herstellung einer qualitativ hochwertigen, insbesondere weitgehend witterungsbeständigen Tür geeignet ist.

Diese Aufgabe wird erfindungsgemäß durch eine Tür, umfassend einen Türrohling, gelöst, welcher acetyliertes Holz umfasst, mit einem Rahmen, der sich um einen wesentlichen Umfang des Türrohlings herum erstreckt, und einem Kern, der im Wesentlichen vom Rahmen umgeben ist, wobei ausschließlich der Rahmen des Türrohlings, zumindest abschnittsweise, acetyliertes Holz aufweist. Der Rahmen umfasst dabei eine Mehrzahl von länglichen Elementen umfasst, welche sich um den Kern herum erstrecken und damit den Umfang des Türrohlings im Wesentlichen definieren, wobei wenigstens eines der länglichen Elemente aus acetyliertem Holz besteht. Die Tür umfasst ferner eine Vorderseiten-Deckplatte, welche sich im Wesentlichen über die gesamte Vorderseite des Türrohlings optisch ansprechendes Aussehen. Wenigstens eine der Deckplatten, vorzugsweise wenigstens die der Innenseite der Tür zugeordnete Deckplatte, ist dabei eine acetylierte MDF-Pressplatte, wodurch der Kern optimal vor äußeren Witterungseinflüssen geschützt ist. Die Verwendung von Pressplatten gegenüber Vollholzplatten hat den Vorteil, dass die Türen deutlich leichter sein können.

Es ist das Verdienst der Erfinder, durch Versuche herausgefunden zu haben, dass die Witterungsbeständigkeit des Türrohlings, bzw. der daraus fertig hergestellten Tür, bereits dadurch signifikant verbessert werden kann, dass ausschließlich der Rahmen des Türrohlings, zumindest abschnittsweise, acetyliertes Holz aufweist. Mit anderen Worten ist es nicht zwingend notwendig, auch den Kern im inneren Bereich des Türrohlings aus dem relativ teuren acetylierten Holz zu fertigen, um eine Tür mit zufriedenstellenden Eigenschaften im Hinblick auf ihr Verhalten in Reaktion auf schwankende Umwelteinflüsse zu erhalten. Dieses Ergebnis war so nicht zu erwarten, da vielmehr angenommen wurde, dass das Schwinden oder Quellen von Holz bereits in nur einem Teil des Türrohlings bzw. der Tür zu einem Verziehen der gesamten Tür führen würde.

In den meisten Fällen sind Türen, und damit vorzugsweise auch die zu ihrer Herstellung verwendeten Türrohlinge im Wesentlichen rechtwinklig ausgebildet und weisen eine Bandseite, an welcher sie mit Hilfe von Scharnieren oder dergleichen an einem Türrahmen befestigt sind, und eine sich dazu parallel erstreckende Schlossseite, an welcher eine Türklinke und/oder ein Türschloss montiert werden kann, auf, sowie eine Kopfseite und eine sich parallel dazu erstreckende Bodenseite.

In diesem Fall kann es vorgesehen sein, dass der Rahmen des Türrohlings an allen vier Seiten acetyliertes Holz umfasst, so dass der Kern im Wesentlichen vollständig von acetyliertem Holz umgeben ist. Zum Einen kann hierdurch der Kern nach außen hin von schädlichen Witterungseinflüssen weitgehend isoliert werden, so dass er, bspw. wenn er ebenfalls im Wesentlichen aus einem Holzwerkstoff gefertigt ist, keine oder nur wenig Feuchtigkeit aufnehmen bzw. abgeben kann. Zum Anderen wird der Kern quasi von dem acetylierten Holz ringsum fest eingespannt, so dass er, selbst wenn er eine geringe Menge an Feuchtigkeit aufnehmen bzw. abgeben sollte, hierdurch nicht nennenswert quellen bzw. schwinden kann. Prinzipiell ist es natürlich auch denkbar, den Kern, statt aus einem Holzwerkstoff, aus einem anderen Werkstoff, beispielsweise aus einem Kunststoff zu fertigen, welcher von Natur aus nicht oder nur geringfügig auf Umwelteinflüsse wie Temperatur- und/oder Feuchtigkeitsschwankungen reagiert. Da bei der Fertigung der Tür aus dem Türrohling letzterer in der Regel auf seiner Vorder- und Rückseite noch mit einer Deckschicht versehen wird, kann der Kern zudem auch in Dickenrichtung der Tür eingespannt werden. Er ist auf diese Weise optisch von dem Nutzer nicht zu erkennen. Bei geeigneter Wahl des Materials, beispielsweise acetyliertes Holz, des äußere Randbereichs des Türrohlings und/oder der Deckschichten kann dem Nutzer der ansprechende Eindruck einer hochwertigen Massivholztür vermittelt werden. Versuche haben zudem gezeigt, dass sich die Witterungsbeständigkeit des gesamten Türrohlings bzw. der daraus gefertigten Tür sogar schon dann deutlich verbessern lässt, wenn lediglich eine oder beide Längsseiten, d.h. die Bandseite und/oder die Schlossseite, des Türrohlings acetyliertes Holz aufweist.

Um einen optisch besonders ansprechenden Eindruck zu erzielen, ist das acetylierte Holz des Rahmens vorzugsweise ein Massivholz. Sofern das Massivholz am äußeren Rand des Türrohlings angeordnet ist, ist dieses in der Regel vom Nutzer der fertigen Tür zu sehen.

Vorzugsweise ist dabei das wenigstens eine längliche Element aus acetyliertem Holz an einem äußeren Rand des Türrohlings angeordnet. Wie oben bereits dargelegt, kann das acetylierte Holz in diesem Fall bei der fertigen Tür in der Regel durch einen Nutzer optisch wahrgenommen werden. Es sei an dieser Stelle bereits angemerkt, dass zwischen dem wenigstens einen länglichen Element aus acetyliertem Holz und dem Kern noch wenigstens ein weiteres längliches Element vorgesehen sein kann. Dieses kann beispielsweise aus einem - gegenüber acetyliertem Holz - günstigeren Material gebildet sein und dabei dem Türrohling, bzw. der daraus gefertigten Tür, vorzugsweise noch weitere, wünschenswerte Eigenschaften verleihen. Beispielsweise kann das weitere längliche Element für die Aufnahme weiterer Beschläge dienen, wie zum Beispiel für die Anbringung einer sich vertikal erstreckenden Stange an der fertigen Tür, welche zum Aufdrücken oder Zuziehen der Tür dient.

Genauso wie der Türrohling selbst, kann auch der Kern im Wesentlichen rechtwinklig ausgebildet sein und zwei seitliche Ränder, einen oberen Rand und einen unteren Rand aufweisen. In diesem Fall erstreckt sich das wenigstens eine längliche Element aus acetyliertem Holz vorzugsweise im Wesentlichen entweder parallel zu den beiden seitlichen Rändern des Kerns oder parallel zu dem oberen und dem unteren Rand des Kerns. Dabei kann das wenigstens eine längliche Element aus acetyliertem Holz mindestens so lang sein wie die jeweiligen Ränder des Kerns, zu denen es sich parallel erstreckt. Hierdurch kann die benötigte Anzahl an länglichen Elementen aus acetyliertem Holz gering gehalten werden, was die Montage bzw. Fertigung des Türrohlings vereinfacht. Zudem entstehen auch nur wenige Fügestellen zwischen den jeweiligen länglichen Elementen, wenn der Kern des Türrohlings rundum mit acetyliertem Holz umgeben wird. Somit kann der Kern sehr gut vor äußeren Witterungseinflüssen geschützt werden.

Ferner kann daran gedacht werden, dass das wenigstens eine längliche Element aus acetyliertem Holz, zumindest an der Bandseite und/oder an der Schlossseite, im Wesentlichen dieselbe Länge wie die diesem Element zugeordnete Seite des Türrohlings aufweist. Die zuvor bereits erwähnten Versuche haben gezeigt, dass insbesondere der Einsatz von acetyliertem Holz an den Rahmenlängsseiten des Türrohlings zu einer deutlichen Verbesserung der Witterungsbeständigkeit des Türrohlings führt. Hinzu kommt, dass diese Seiten den Blicken eines Nutzers der fertigen Tür im besonderen Maß ausgesetzt sind.

Da ein Nutzer der fertigen Tür von dessen vier Schmalseiten am ehesten die Schlossseite und/oder die Bandseite sehen wird, ist es vorteilhaft, wenn jeweils an diesen beiden Seiten ein längliches Element aus acetyliertem Holz vorgesehen ist, welches sich über die gesamte Länge bzw. Höhe der Tür erstreckt. Diese beiden länglichen Elemente aus acetyliertem Holz können an der oberen Seite und unteren Seite der Tür jeweils ein längliches Element aus acetyliertem Holz zwischen sich aufnehmen, wobei sie vorzugsweise unmittelbar an diese angrenzen. Auf diese Weise ist der Kern vollständig von länglichen Elementen aus acetyliertem Holz umgeben. Gleichzeitig sieht eine Betrachter der fertigen Tür bei dieser Anordnung an der Schloss- und Bandseite keine Fugen zwischen den länglichen Elementen aus acetyliertem Holz, so dass ihm der Eindruck einer Tür aus Massivholz vermittelt werden kann.

Alternativ ist es jedoch auch denkbar, dass sich die beiden länglichen Elemente aus acetyliertem Holz an der oberen und unteren Seite der Tür über die gesamte Breite der Tür erstrecken und somit die beiden länglichen Elemente aus acetyliertem Holz an der Schlossseite und der Bandseite zwischen sich aufnehmen. Dies wird zum Beispiel dann bevorzugt, wenn die Tür in einer Region oder einem Land verbaut werden soll, in der bzw. dem Türen traditionell bereits in einer sehr frühen Phase des Baus auf die Baustelle geliefert werden, wo sie über längere Zeit hinweg Witterungseinflüssen, beispielsweise Regen, im Wesentlichen ungeschützt ausgesetzt sind. Bei der hier beschriebenen Anordnung der länglichen Elemente aus acetyliertem Holz befinden sich jedoch zwischen diesen Elementen an der unteren und oberen Seite der Tür keine Fugen, so dass Feuchtigkeit weniger leicht in die Tür einzudringen vermag.

Um die strukturelle Integrität des Türrohlings weiter zu erhöhen, wird in einer vorteilhaften Weiterbildung der vorliegenden Erfindung vorgeschlagen, dass die Mehrzahl von länglichen Elementen wenigstens ein längliches Verstärkungselement umfasst, welches, zumindest bereichsweise, aus einem Verbundwerkstoff, insbesondere aus einem faserverstärkten Verbundwerkstoff, gebildet ist. Der Einsatz von länglichen Elementen, die aus einem Verbundwerkstoff, insbesondere aus einem faserverstärkten Verbundwerkstoff, gebildet sind, hat gegenüber dem Einsatz bspw. von Stahlschienen, die im Stand der Technik für eine Verstärkung des Türrohlings bekannt sind, den Vorteil, dass die länglichen Verstärkungselemente aus dem Verbundwerkstoff deutlich leichter sind, und zudem mindestens die gleichen, auf die Tür wirkenden Lasten übernehmen können. Zudem weisen die länglichen Verstärkungselemente aus Verbundwerkstoff, insbesondere aus faserverstärktem Verbundwerkstoff, in der Regel gegenüber Metallschienen einen geringeren thermischen Ausdehnungskoeffizienten auf, so dass es bei starken Temperaturschwankungen zu keinem unerwünschten "Arbeiten" bzw. "Verziehen" der Tür kommt.

Besonders stabil kann der erfindungsgemäße Türrohling dann ausgebildet werden, wenn der Kern im Wesentlichen um seinen gesamten Umfang herum von länglichen Verstärkungselementen umgeben ist

Für eine möglichst einfache Montage bzw. Fertigung des Türrohlings wird vorgeschlagen, sofern der Kern im Wesentlichen rechtwinklig ausgebildet ist, dass sich das wenigstens eine längliche Verstärkungselement im Wesentlichen entweder parallel zu den beiden seitlichen Rändern des Kerns oder parallel zu dem oberen und dem unteren Rand des Kerns erstreckt. Falls der Kern im Wesentlichen um seinen gesamten Umfang herum von den länglichen Verstärkungselementen umgeben ist, könnten sich z.B. zwei längliche Verstärkungselemente parallel zu den seitlichen Rändern des Kerns erstrecken, wohingegen sich zwei weitere längliche Verstärkungselemente parallel zu dem oberen und dem unteren Rand des Kerns erstrecken. In diesem Fall können zum Beispiel die beiden länglichen Verstärkungselemente, die sich parallel zu den seitlichen Rändern des Kerns erstrecken, die beiden länglichen Verstärkungselemente, die sich parallel zu dem oberen und unteren Rand des Kerns erstrecken, zwischen sich aufnehmen, wobei sie vorzugsweise unmittelbar an diese angrenzen; oder die beiden länglichen Verstärkungselemente, die sich parallel zu dem oberen und dem unteren Rand des Kerns erstrecken, können die beiden länglichen Verstärkungselemente, die sich parallel zu den seitlichen Rändern des Kerns erstrecken, zwischen sich aufnehmen, wobei sie vorzugsweise ebenfalls unmittelbar an diese angrenzen.

Alternativ könnten natürlich auch einem Rand oder mehreren Rändern des Kerns kein derartiges längliches Verstärkungselement zugeordnet sein, so dass beispielsweise nur ein Rand oder zwei Ränder oder drei Ränder des Kerns mit derartigen länglichen Verstärkungselementen bewehrt ist bzw. sind.

Prinzipiell kann daran gedacht werden, das wenigstens eine längliche Verstärkungselement kürzer als die halbe Länge der jeweiligen Ränder des Kerns, zu denen es sich parallel erstreckt, auszubilden. In diesem Fall ist es zum Beispiel möglich, jeweils an den Ecken des Rahmens zwei solcher Verstärkungselemente zu Winkel-Eckstücken zusammenzufügen. Alternativ können solche Winkel-Eckstücke jedoch auch einstückig bereitgestellt werden. Eine erfindungsgemäße Tür wird vorzugsweise vier Winkel-Eckstücke aufweisen, ggf. jedoch nur zwei oder drei.

Um die auf die Tür wirkenden Kräfte gut aufnehmen zu können, wird es bevorzugt, dass das wenigstens eine längliche Verstärkungselement mindestens halb so lang, vorzugsweise mindestens ¾ so lang und stärker bevorzugt mindestens genauso lang ist wie die jeweiligen Ränder des Kerns, zu denen es sich parallel erstreckt.

Prinzipiell kann zwar daran gedacht werden, dass sich das wenigstens eine längliche Verstärkungselement im Wesentlichen über die gesamte Länge der jeweiligen Seiten des Türrohlings, zu denen es parallel ist, erstreckt. Hierdurch würde man jedoch ein Stück des länglichen Verstärkungselements an den entsprechenden Seiten des Türrohlings von außen sehen, was optisch möglicherweise nicht ansprechend wäre. Auch könnte der Kern dann nicht vollständig von acetyliertem Holz umgeben werden. Hinzu kommt, dass bei der Herstellung der fertigen Tür aus dem Türrohling im Randbereich des Türrohlings noch Scharniere und/oder eine Klinke und ggf. ein Schloss zu montieren sind. Da die nachträgliche Bearbeitung von einem Verbundwerkstoff, insbesondere von einem faserverstärkten Verbundwerkstoff, schwierig ist, wird es bevorzugt, im Außenbereich des Türrohlings, Holz, insbesondere acetyliertes Holz, vorzusehen. Dieses erleichtert das Anbringen von Beschlägen und wirkt auf den Betrachter der fertigen Tür optisch ansprechender. Es wird daher vorgeschlagen, dass das wenigstens eine längliche Verstärkungselement kürzer ist, als die jeweiligen Seiten des Türrohlings, zu denen es sich parallel erstreckt. Insbesondere wird vorgeschlagen, dass das wenigstens eine längliche Verstärkungselement zwischen dem Kern und wenigstens einem zusätzlichen länglichen Element, welches kein längliches Verstärkungselement ist, angeordnet wird. Das zusätzliche längliche Element kann beispielsweise im Wesentlichen aus Holz gefertigt sein und dazu dienen, an der entsprechenden Stelle der fertigen Tür zusätzliche Beschläge vorzusehen, wie zum Beispiel eine vertikal verlaufende Stange zum Zuziehen und/oder Aufdrücken der Tür.

Vorzugsweise erstreckt bzw. erstrecken sich das wenigstens eine längliche Verstärkungselement, und weiter bevorzugt auch die übrigen länglichen Elemente, über die gesamte Dickenrichtung des Türrohlings. Somit entfällt die Notwendigkeit, den Türrohling am Ende plan zu schleifen. Dadurch, dass sich das wenigstens eine längliche Verstärkungselement über die gesamte Dickenrichtung des Türrohlings erstreckt, kann dieses verhältnismäßig viel Kraft, die auf den Türrohling wirkt, aufnehmen. Bei einer entsprechenden Dicke des fertigen Türblatts, welche bei außenbewitterten Haustüren bei mindestens 68 mm liegen sollte, kann das wenigstens eine längliche Verstärkungselement dafür entsprechend schmal ausgebildet werden.

Wenn sich auch der Kern über die gesamte Dickenrichtung des Türrohlings erstreckt, kann auf einfache Weise jeweils an der Vorder- und/oder an der Rückseite des Türrohlings eine ebene Fläche erzeugt werden, auf welche sich bei der Herstellung der fertigen Tür eine Deckplatte anbringen lässt.

Insbesondere kann daran gedacht werden, zwischen dem wenigstens einen länglichen Element aus acetyliertem Holz und dem Kern jeweils ein längliches Verstärkungselement anzuordnen. Hierdurch kann eine besonders stabile Konfiguration des erfindungsgemäßen Türrohlings erzielt werden. Der erfindungsgemäße Türrohling zeichnet sich dabei insbesondere durch eine hohe Witterungsbeständigkeit und geringe Verformungen aus, bei gleichzeitig geringem Gewicht und verhältnismäßig geringen Herstellungskosten.

Besonders leichtgewichtig kann der Türrohling zudem dann ausgebildet werden, wenn das wenigstens eine längliche Verstärkungselement einen Außenbereich, der aus einem Verbundwerkstoff, insbesondere aus einem faserverstärkten Verbundwerkstoff, gebildet ist, und ferner wenigstens einen Innenbereich umfasst, der frei von Verbundwerkstoff ist, wobei der Außenbereich - betrachtet in einer Schnittebene orthogonal zu der Längserstreckungsrichtung des wenigstens einen länglichen Verstärkungselements - den wenigstens einen Innenbereich, zumindest abschnittsweise, umgibt. Somit kann ein wesentlicher Bestandteil des Türrohlings, nämlich wenigstens eines von den länglichen Elementen, die sich um den Kern herum erstrecken, zumindest bereichsweise, aus einem Verbundwerkstoff, insbesondere aus einem faserverstärkten Verbundwerkstoff, bestehen.

Die Verstärkungselemente können - separat von der eigentlichen Herstellung des Türrohlings - vorgefertigt werden. Sie müssen dann ggf. nur noch auf das richtige Maß abgelängt werden. Gegenüber aus dem Stand der Technik bekannten flachstreifenartigen Verstärkungselementen, die als Vollprofile ausgebildet sind, bietet ein Verstärkungselement, bei welchem ein Außenbereich aus Verbundwerkstoff einen verbundwerkstofffreien Innenbereich - zumindest abschnittsweise - umgibt, einen merklich höheren Widerstand gegen einige Belastungsarten, wie zum Beispiel gegen Biegebelastungen, ohne dass dabei jedoch die Menge des zu verwendenden Verbundwerkstoffs deutlich erhöht zu werden braucht.

Hinzu kommt, dass, insbesondere wenn sich das wenigstens eine Verstärkungselement im Wesentlichen über die gesamte Dicke des Türrohlings erstreckt, der Aufwand und somit die Kosten bei der Montage des Türrohlings reduziert werden können. Zwar ist die Herstellung des Verstärkungselements auf Grund seiner unterschiedlichen Bereiche in der Regel aufwendiger als die Herstellung eines flachstreifenartigen Verstärkungselements mit Vollprofil, doch können dafür, die oben beschriebenen Verstärkungselemente als Ersatz für herkömmlich verwendete, verbundwerkstofffreie längliche Elemente eingesetzt werden, so dass keine zusätzlichen Verarbeitungsschritte bei der Montage des Türrohlings erforderlich sind.

Unter "Türrohling" ist im Sinne der vorliegenden Erfindung ein Gegenstand zu verstehen, welcher - im Gegensatz zu einer angefertigten Tür, die einen Türrohling umfasst - noch keine Beschläge und auch keine Deckschicht bzw. Deckschichten aufweist, die sich über die Vorder- und/oder Rückseite des Türrohlings erstreckt.

Unter "Verbundwerkstoff", bzw. "faserverstärkter Verbundwerkstoff", ist im Sinne der vorliegenden Erfindung insbesondere ein Material zu verstehen, welches als maßgeblichen Bestandteil (Kunst-)Harz oder einen anderen Kunststoff umfasst, und welches mit Fasern, wie beispielsweise Kohlenstofffasern, Glasfasern oder Metallfasern, versetzt ist. Beispielsweise können in eine Kunststoff entsprechende Fasern eingearbeitet sein.

Unter "umgeben" ist im Sinne der vorliegenden Erfindung zu verstehen, dass der Außenbereich nicht nur lediglich an dem wenigstens einen Innenbereich angrenzt; vielmehr ist hierunter zu verstehen, dass der Außenbereich einen - beliebig geformten - konkaven Abschnitt aufweist, welcher um einen entsprechend konvex geformten Gegenabschnitt des Innenbereichs herum ausgebildet ist. Der Außenbereich kann den wenigstens einen Innenbereich dabei auch vollständig umgeben. Der konkav geformte Abschnitt des Außenbereichs kann prinzipiell zum Beispiel rund, halbrund oder oval gebildet sein, doch wird es im Hinblick auf eine einfache Fertigung bevorzugt, wenn er eckig, insbesondere rechteckig ausgebildet ist.

Unter "länglich" im Hinblick auf die den Kern umgebenden länglichen Elemente ist im Sinne der vorliegenden Erfindung zu verstehen, dass das jeweilige Element eine klar erkennbare Vorzugsrichtung aufweist, in welche es sich, vorzugsweise geradlinig, erstreckt. Für den Fall, dass das längliche Element als Winkelelement ausgebildet ist, kann das entsprechende Element jedoch auch eine Knickstelle oder eine Rundung bzw. Biegung aufweisen, so dass seine Haupterstreckungsrichtung nicht geradlinig verläuft.

Unter dem "Außenbereich" des Verstärkungselements ist im Sinne der vorliegenden Erfindung ein integral ausgebildeter Abschnitt des Verstärkungselements zu verstehen.

Damit sich das wenigstens eine längliche Verstärkungselement bei der Montage des Türrohlings als Ersatz für ein herkömmliches längliches Element, welches keinen Verbundwerkstoff aufweist, verwenden lässt, wird vorgeschlagen, dass das wenigstens eine längliche Verstärkungselement eine rechtwinklige, beispielsweise quadratische, Querschnittsform aufweist. Es wird im Hinblick auf eine einfache Fertigung bevorzugt, wenn auch der wenigstens eine Innenbereich eine rechtwinklige Querschnittsform aufweist. Prinzipiell kann der wenigstens eine Innenbereich jedoch auch eine andere Querschnittsform aufweisen, wie beispielsweise eine kreisrunde, halbkreisförmige oder ovale Querschnittsform. Wenn von "Querschnittsform" des länglichen Verstärkungselements oder seines Außenbereichs oder seines wenigstens einen Innenbereichs hier die Rede ist, ist stets der Querschnitt in einer Schnittebene orthogonal zu der Längserstreckungsrichtung des entsprechenden Verstärkungselements gemeint.

Weist der wenigstens eine Innenbereich eine rechtwinklige Querschnittsform auf, so kann der Außenbereich den wenigstens einen Innenbereich an wenigstens zwei Seiten, vorzugsweise an wenigstens drei Seiten, stärker bevorzugt an allen vier Seiten umgeben. Insbesondere, wenn der wenigstens eine Innenbereich mit einem festen Werkstoff, wie zum Beispiel Holz gefüllt ist, kann der Außenbereich das Material des wenigstens einen Innenbereichs somit weitgehend formschlüssig aufnehmen.

Aus demselben Grund ist es auch von Vorteil, wenn der Außenbereich mindestens 50%, bevorzugt mindestens 75%, stärker bevorzugt mindestens 90% und am stärksten bevorzugt 100% des Umfangs des wenigstens einen Innenbereichs umgibt. Hierbei wird wieder von einer Betrachtung einer zu der Längserstreckungsrichtung des wenigstens einen länglichen Verstärkungselements orthogonalen Schnittebene ausgegangen. Besonders bevorzugt ist es, wenn der Außenbereich den wenigstens einen Innenbereich vollständig umgibt. Dies ist jedoch nicht zwingend. Beispielsweise kann der Außenbereich auch die Form eines C-Profils oder eines Doppel-T-Trägers aufweisen. Der Außenbereich kann auch mehrere Innenbereiche aufweisen, von denen wenigstens einer vollständig von dem Außenbereich umgeben ist, wohingegen wenigstens ein anderer Innenbereich nur abschnittsweise von dem Außenbereich umgeben ist.

Weist das wenigstens eine längliche Verstärkungselement über seine gesamte Länge hinweg einen im Wesentlichen konstanten Querschnitt auf, so kann der aus dem Verbundwerkstoff gefertigte Außenbereich kostengünstig durch ein Extrusionsverfahren gefertigt werden. Mit einem solchen Extrusionsverfahren lassen sich Hohlprofile mit annähernd beliebiger Querschnittsform relativ einfach und somit kostengünstig in großer Stückzahl fertigen.

In einer bevorzugten Ausführungsform der vorliegenden Erfindung weist das wenigstens eine längliche Verstärkungselement zwei, vorzugsweise im Wesentlichen identisch ausgebildete, Innenbereiche auf, die typischerweise voneinander räumlich getrennt sind. Prinzipiell kann es aber auch nur einen Innenbereich oder mehr als zwei Innenbereiche aufweisen, beispielsweise vier Innenbereiche. Die wenigstens zwei Innenbereiche könnten zum Beispiel durch wenigstens einen Trennsteg räumlich voneinander getrennt sein. Der wenigstens eine Trennsteg ist dabei vorzugsweise aus dem Verbundwerkstoff, insbesondere faserverstärktem Verbundwerkstoff, des Außenbereichs, und vorzugsweise integral mit dem restlichen Außenbereich, gebildet. In diesem Fall ist der wenigstens eine Trennsteg Bestandteil des Außenbereichs des länglichen Verstärkungselements. Prinzipiell ist es aber auch denkbar, dass der wenigstens eine Trennsteg aus einem verbundwerkstofffreien Material gebildet ist. In diesem Fall ist er Teil des Innenbereichs, wobei der Innenbereich dann mehrere unterschiedliche verbundwerkstofffreie Materialien umfasst.

Um Gewicht zu sparen, kann daran gedacht werden, dass der wenigstens eine Innenbereich frei von jedem festen Material ist. Dies bedeutet, dass der wenigstens eine Innenbereich zum Beispiel nur mit Luft gefüllt sein· kann. Unter Umständen kann dies jedoch zu einer reduzierten Isolationsfähigkeit des Türrohlings, insbesondere gegenüber Schall, führen. Daher wird alternativ vorgeschlagen, dass der wenigstens eine Innenbereich mit einem festen Material ausgefüllt ist, welches kein Verbundwerkstoff ist. Hierbei kann es sich z.B. um ein, vorzugsweise leichtes, Holz handeln, welches entsprechend gute Schall-Isolationseigenschaften aufweist und dabei von geringerem Gewicht ist und zudem auch kostengünstiger ist als der Verbundwerkstoff ist. Andere Füllmaterialien können zum Beispiel Perlit oder Kunststoff- und/oder Metallschäume sein. Schäume eignen sich deshalb besonders gut, da sie zum einen relativ leicht sind und zum anderen eine gute Wärmeisolierung bieten.

In den nachfolgenden Figuren wird ein bevorzugtes Ausführungsbeispiel eines Türrohlings gemäß der vorliegenden Erfindung näher beschrieben. Es stellt dar:
- Fig. 1a:: eine Sicht auf die Vorderseite von ·einem von vier Ausführungsbeispielen eines erfindungsgemäßen Türrohlings;
- Fig. 1b:: eine Querschnittsansicht entlang der Linie lb-lb des in Fig. 1 a dargestellten Türrohlings, wobei der Türrohling bereits mit Deckplatten versehen ist;
- Figs. 2-4:: jeweils eine Sicht auf die Vorderseite von einem zweiten, dritten bzw. vierten Ausführungsbeispiel eines erfindungsgemäßen Türrohlings;
- Figs. 5-10:: jeweils eine Querschnittsansicht von einem von sechs Ausführungsbeispielen der Verstärkungselemente des erfindungsgemäßen Türrohlings.

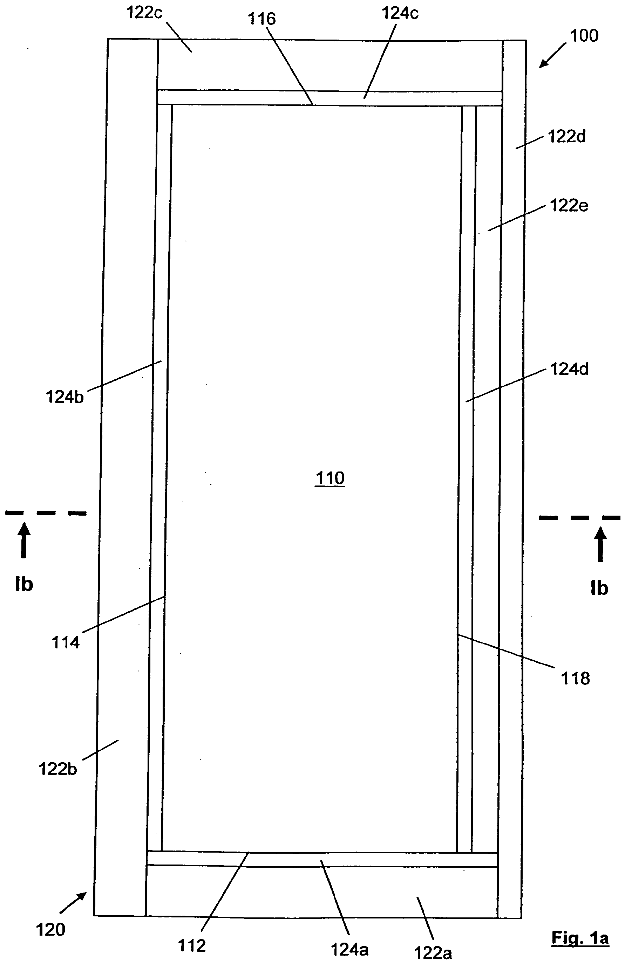

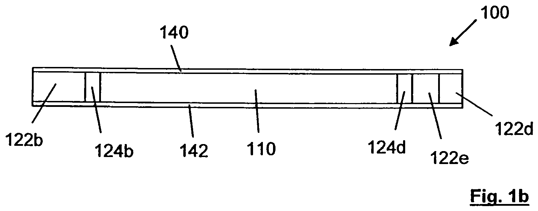

In Figur 1 ist ein erstes Ausführungsbeispiel des erfindungsgemäßen Türrohlings ganz allgemein mit 100 bezeichnet. Als wesentliche Bestandteile umfasst der Türrohling 100 einen rechtwinklig ausgebildeten Kern 110, sowie einen Rahmen 120, welcher aus mehreren länglichen Elementen 122a-122e und 124a-124d gebildet ist. Der Kern 110 weist zwei seitliche Ränder 114, 118 und einen oberen Rand 116, sowie einen unteren Rand 112 auf. Die länglichen Elemente 122a-122e und 124a-124d des Rahmens 120 erstrecken sich ringsum um alle vier Seiten 112, 114, 116, 118 des Kerns 110.

Bei vier der länglichen Elemente, nämlich bei den länglichen Elementen 124a-124d, handelt es sich um längliche Verstärkungselemente, die aus einem faserverstärkten Verbundwerkstoff gebildet sind. Die beiden länglichen Verstärkungselement 124b und 124d erstrecken sich dabei parallel zu den seitlichen Rändern 114 und 118 des Kerns 110, wobei sie genauso lang wie die seitlichen Ränder 114 und 118 des Kerns ausgebildet sind.

Die äußeren vier länglichen Elemente 122a-122d sind aus einem acetylierten Holz gebildet. Das längliche Element 122b erstreckt sich dabei über die gesamte Länge der Bandseite des Türrohlings 100, während sich das längliche Element 122d parallel hierzu über die gesamte Länge der Schlossseite des Türrohlings 100 erstreckt. Zwischen den beiden länglichen Elementen 122b und 122d erstrecken sich an Boden- und Kopfseite des Türrohlings 100 die beiden länglichen Elemente 122a und 122c parallel zueinander. Somit ist bei dieser Ausführungsform der gesamte Umfang des Türrohlings 100 von länglichen Elementen umgeben, welche aus einem acetylierten Holz gebildet sind. Es sei an dieser Stelle jedoch noch einmal angemerkt, dass bereits dann ein Quellen und Schwinden des Türrohlings bzw. der daraus gebildeten Tür merklich verringert werden kann, wenn nur wenigstens ein längliches Element aus acetyliertem Holz an wenigstens einer Längsseite des Türrohlings 100, d.h. an der Schloss- oder/und an der Bandseite, vorgesehen wird.

Sind die äußeren länglichen Element 122a-122d aus einem acetyliertem Massivholz gebildet, so können diese Elemente der fertigen Tür nach außen hin einen optisch soliden und hochwertigen Eindruck verleihen, wobei diese Elemente - im Vergleich zu den Verstärkungselementen - relativ leicht bearbeitbar sind, was für das Anbringen von Beschlägen oder für den Einbau eines Türschlosses von Vorteil ist. Da sich in diesem Ausführungsbeispiel das jeweils äußerste längliche Element 122b und 122d auf der Band- und auf der Schlossseite des Türrohlings 100 über die gesamte Länge bzw. Höhe des Türrohlings 100 erstreckt, weist der Türrohling 100 an diesen Schmalseiten keine Fugen auf. Dies ist von Vorteil, da ein Betrachter von den vier Schmalseiten der eingebauten, fertigen Tür am ehesten die Band- und die Schlossseite wahrnimmt. Somit kann dem Betrachter der fertigen Tür der Eindruck vermittelt werden, dass der Türrohling aus einem einzigen, massiven Holzblatt gefertigt ist.

Der Rahmen 120 des Türrohlings 100 ist auf der Bandseite (in Fig. 1 auf der linken Seite) ausreichend breit ausgebildet, um hier genügend Platz für die Montage von Beschlägen, insbesondere Scharnierbeschlägen zur Verfügung zu haben. Ebenso ist der Rahmen 120 des Türrohlings 100 ist auf der Schlossseite (in Fig. 1 auf der rechten Seite) ausreichend breit ausgebildet, um hier genügend Platz für die Montage von Beschlägen, insbesondere für den Einbau eines Türschlosses zur Verfügung zu haben. Hierzu ist auch das zusätzliche längliche Element 122e an der Schlossseite vorgesehen. Dieses kann wahlweise ebenfalls aus acetyliertem Holz bestehen, doch ist dies auf keinen Fall zwingend. Das zusätzliche längliche Element 122e kann ebenso aus einem nicht acetyliertem Holz oder einem ganz anderen Werkstoff gebildet sein.

Die Ränder 112-118 des Kerns 110 grenzen in diesem Ausführungsbeispiel allesamt unmittelbar an jeweils eines der Verstärkungselemente 124a-124d an. Der Kern 110 des Türrohlings 100 ist somit allseitig von den länglichen Verstärkungselementen 124a-124d umgeben. Diese können aufgrund ihrer Anordnung auf die fertige Tür wirkende Kräfte sehr gut aufnehmen.

Der Kern 110 kann aus einem - gegenüber dem Rahmen 120 - leichteren und günstigeren Material gefertigt sein, welches vorzugsweise gute Isolationseigenschaften aufweist. Er kann einen ein- oder einen mehrlagigen Aufbau aufweisen, wobei der genaue Aufbau des Kerns 110 normalerweise für bestimmte Anforderungen wie Gewicht, thermische Dämmung und akustische Dämmung ausgewählt und optimiert wird. Zum Beispiel kann der Kern 110 aus drei Lagen bestehen, von denen die äußeren Lagen aus Grobspan- oder Sperrholzplatten und die mittlere Lage z.B. aus Polyethan bestehen. Ebenso kann der Kern aber auch aus zwei Lagen oder aus mehr als drei Lagen, beispielsweise aus fünf Lagen, bestehen.

Der Kern 110 des Türrohlings 100 ist allseitig von den länglichen Verstärkungselementen 124a-124d und, weiter außen, zudem von den aus acetyliertem Holz gefertigten länglichen Elementen 122a-122d umgeben. Aufgrund dieses Aufbaus können einerseits mechanische Kräfte, die auf die aus dem Türrohling 100 gefertigte Tür wirken, besonders gut aufgenommen werden. Andererseits ist die aus dem Türrohling 100 gefertigte Tür auch besonders widerstandsfest gegenüber wechselnden Umwelteinflüssen, wie beispielsweise starken Temperatur- oder/und Feuchtigkeitsschwankungen. Durch den Einsatz von acetyliertem Holz im Rahmen des Türrohlings 100 wird ein "Arbeiten" bzw. "Verziehen" der Tür verhindert oder zumindest minimiert.

Figur 1b zeigt einen Querschnitt entlang der in Figur 1a angedeuteten Linie lb - lb durch den Türrohling 100, wobei dieser bereits mit einer Vorderseiten-Deckplatte 140 und einer Rückseiten-Deckplatte 142 versehen ist, welche eine aus dem Türrohling 100 hergestellte Tür üblicherweise aufweist. Um den Kern 110, die länglichen Verstärkungselemente 124a-124d und das zusätzliche längliche Element 122e, die von den aus acetyliertem Holz gebildeten länglichen Elementen 124a-124d umgeben sind, optimal vor wechselnden Witterungseinflüssen zu schützen und den Einfluss von solchen Witterungseinflüssen auf die Tür zu minimieren, sind die Vorderseiten-Deckplatte 140 und die Rückseiten-Deckplatte 142 in dem vorliegenden Ausführungsbeispiel im Wesentlichen aus einer acetylierten MDF-Pressplatte gebildet. Es sei jedoch noch einmal darauf hingewiesen, dass prinzipiell auch ein anderer Werkstoff, insbesondere ein Werkstoff, der kein acetyliertes Holz umfasst, für die Vorderseiten-Deckplatte 140 und/oder die Rückseiten-Deckplatte 142 verwendet werden kann.

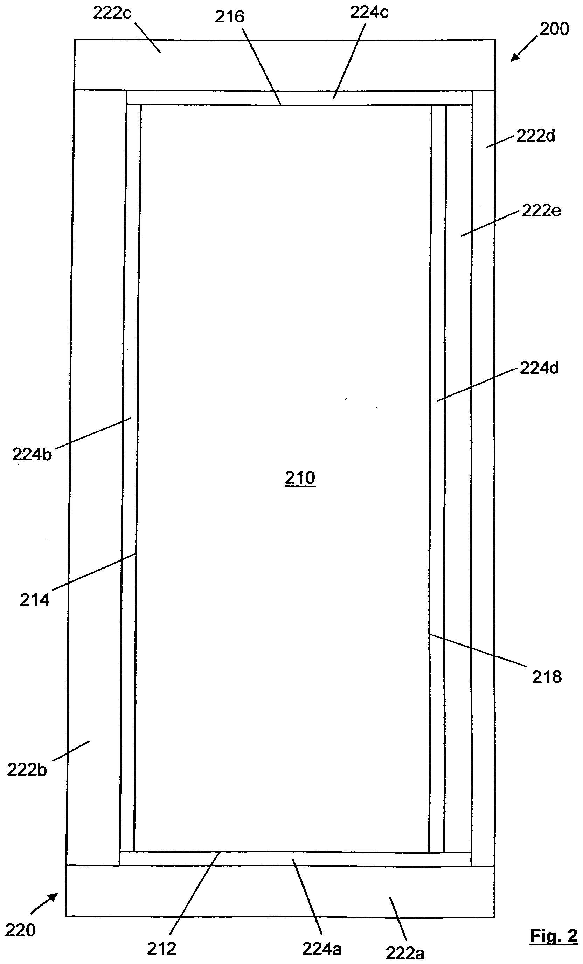

Identische oder ähnliche strukturelle und/oder funktionelle Merkmale der in Figur 2 dargestellten zweiten Ausführungsform 200 weisen die gleichen Bezugszeichen auf wie die in Figur 1 dargestellte erste Ausführungsform 100, jedoch vermehrt um die Zahl 100. Im Folgenden wird die zweite Ausführungsform 200 nur insoweit beschrieben, als sie sich von der ersten Ausführungsform 100 unterscheidet, auf deren Beschreibung hiermit ansonsten verwiesen wird.

Die in Figur 2 dargestellte zweite Ausführungsform 200 des erfindungsgemäßen Türrohlings unterscheidet sich von der in Figur 1 dargestellten Ausführungsform 100 lediglich in einem Gesichtspunkt. Bei dieser Ausführungsform erstreckt sich das jeweils äußere längliche Element 222b und 222d auf der Band- und auf der Schlossseite des Türrohlings 100 nicht über die gesamte Länge bzw. Höhe des Türrohlings. Stattdessen erstrecken sich das untere längliche Element 222a und das obere längliche Element 222c über die gesamte Breite des Türrohlings 200. Auf diese Weise befinden sich an der oberen und unteren Schmalseite der fertigen Tür keine Fugen im Türrohling, über welche Feuchtigkeit, z.B. Regenwasser, eindringen kann. In einigen Ländern werden Türen traditionell bereits in einer sehr frühen Phase des Gebäudebaus auf die Baustelle geliefert, so dass die Türen dort häufig über eine lange Zeit hinweg ungeschützt der Witterung ausgesetzt sind. Insbesondere für diese Länder ist der Einsatz von Türrohlingen 200 gemäß der zweiten Ausführungsform zu bevorzugen.

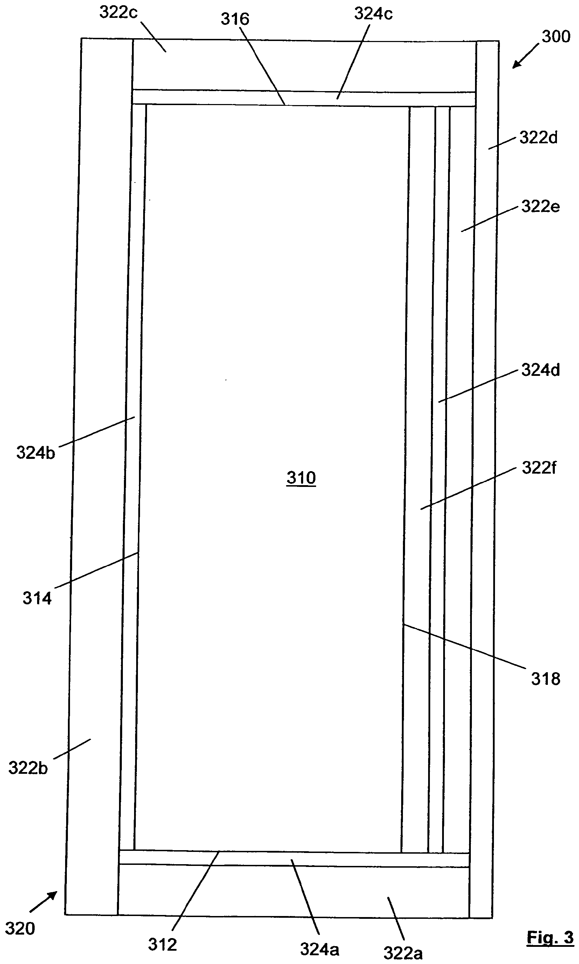

Identische oder ähnliche strukturelle und/oder funktionelle Merkmale der in Figur 3 dargestellten dritte Ausführungsform 300 weisen die gleichen Bezugszeichen auf wie die in Figur 1 dargestellte erste Ausführungsform 100, jedoch vermehrt um die Zahl 200. Im Folgenden wird die dritte Ausführungsform 300 nur insoweit beschrieben, als sie sich von der ersten Ausführungsform 100 unterscheidet, auf deren Beschreibung hiermit ansonsten verwiesen wird.

Die in Figur 3 dargestellte dritte Ausführungsform 300 des erfindungsgemäßen Türrohlings unterscheidet sich von der in Figur 1 dargestellten ersten Ausführungsform 100 lediglich in einem Gesichtspunkt. Auch bei der dritten Ausführungsform grenzt das von dem Kern 310 aus betrachtet auf der Bandseite des Türrohlings (in Figur 3 auf der linken Seite) angeordnete längliche Verstärkungselement 324b unmittelbar an den entsprechenden seitlichen Rand 314 des Kerns 310 an. Jedoch ist zwischen dem von dem Kern 310 aus betrachtet auf der Schlossseite (in Fig. 1 auf der rechten Seite) angeordneten länglichen Verstärkungselement 324d und dem Kern 310 ein weiteres längliches Element 322f ange-ordnet, welches kein längliches Verstärkungselement ist, d.h. nicht aus einem Verbundwerkstoff gebildet ist. Das Vorsehen des zusätzlichen länglichen Elements 322f ist beispielsweise dann von Vorteil, wenn bei der fertigen Tür an dieser Stelle weitere Beschläge montiert werden sollen, wie zum Beispiel eine vertikal verlaufende Stange zum Aufdrücken oder Zuziehen der Tür.

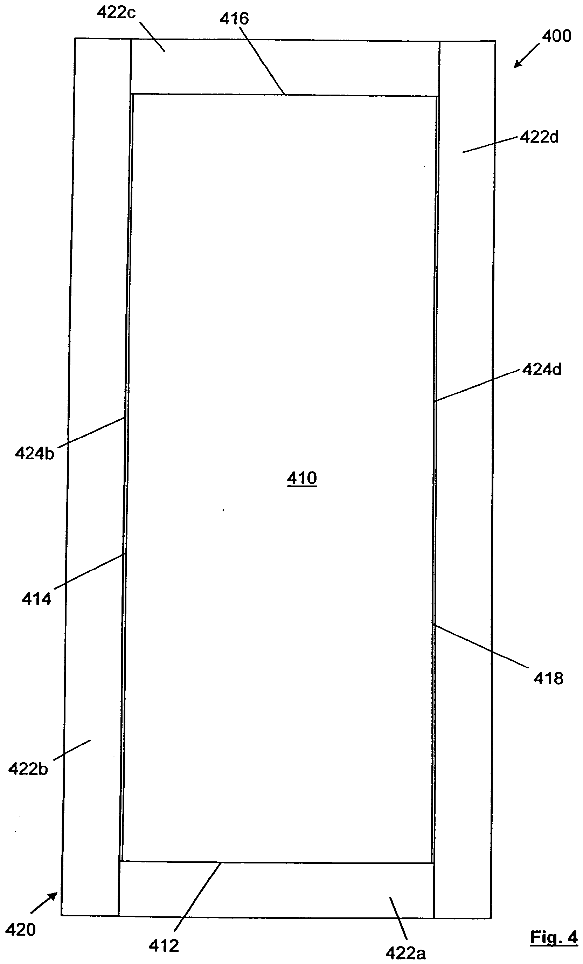

Identische oder ähnliche strukturelle und/oder funktionelle Merkmale der in Figur 4 dargestellten vierten Ausführungsform 400 weisen die gleichen Bezugszeichen auf wie die in Figur 1 dargestellte erste Ausführungsform 100, jedoch vermehrt um die Zahl 300. Im Folgenden wird die vierte Ausführungsform 400 nur insoweit beschrieben, als sie sich von der ersten Ausführungsform 100 unterscheidet, auf deren Beschreibung hiermit ansonsten verwiesen wird.

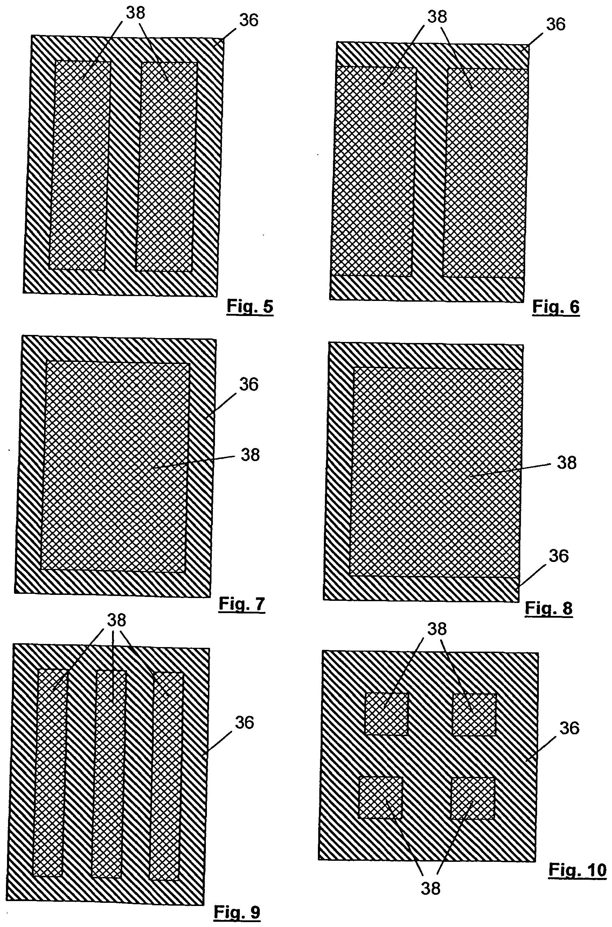

Die in Figur 4 dargestellte vierte Ausführungsform 400 des erfindungsgemäßen Türrohlings unterscheidet sich von der in Figur 1 dargestellten Ausführungsform 100 in den folgenden Gesichtspunkten. Anstelle von vier länglichen Verstärkungselementen umfasst die vierte Ausführungsform 400 lediglich zwei längliche Verstärkungselemente, nämlich ein erstes längliches Verstärkungselement 424b, welches an der Bandseite des Türrohlings 400 unmittelbar an den entsprechenden Seitenrand 414 des Kerns 410 angrenzt und sich über die gesamte Höhe des Kerns 410 erstreckt, und ein zweites längliches Verstärkungselement 424d, welches an der Schlossseite des Türrohlings 400 unmittelbar an den entsprechenden Seitenrand 418 des Kerns 410 angrenzt und sich über die gesamte Höhe des Kerns 410 erstreckt. Die beiden länglichen Verstärkungselemente 414 und 418 sind - verglichen mit den Verstärkungselementen der zuvor beschriebenen Ausführungsformen 100, 200, 300 - relativ schmal ausgebildet. Sie bestehen aus einem aus faserverstärktem Verbundwerkstoff gebildeten Vollprofil, während die Verstärkungselemente der zuvor beschriebenen Ausführungsformen 100, 200, 300 ein komplexeres Profil aufweisen, wie es nachfolgend noch näher im Hinblick auf die Figuren 5 bis 10 beschrieben wird. Ferner ist bei der vierten Ausführungsform 400 des Türrohlings kein zusätzliches längliches Element zwischen dem länglichen Verstärkungselement 424d auf der Schlossseite des Türrohlings 400 und dem Kern 410 vorgesehen.

Es sei angemerkt, dass die oben beschriebenen Gesichtspunkte, in welchen sich die zweite, die dritte und die vierte Ausführungsform von der ersten Ausführungsform unterscheiden, auch wahlweise miteinander kombiniert werden können.

Die Figuren 5-10 zeigen sechs verschiedene Beispiele von unterschiedlichen Querschnittsformen, wie sie für die Verstärkungselemente 124a-124d, 224a-224d, 324a-324d der oben beschriebenen ersten drei Ausführungsformen 100, 200, 300 des erfindungsgemäßen Türrohlings verwendet werden können. Die Querschnitte liegen in einer Ebene, die orthogonal zu der Längserstreckungsrichtung des jeweiligen Verstärkungselements 124a-124d, 224a-224d, 324a-324d orientiert ist. Aus Kostengründen ist es vorteilhaft, alle Verstärkungselemente 124a-124d, 224a-224d, 324a-324d eines Türrohlings 100, 200, 300 mit dem gleichen Querschnitt auszubilden. Dies ist jedoch keineswegs zwingend; stattdessen können auch verschiedene Verstärkungselemente eines Türrohlings verschiedene Querschnitte aufweisen.

Das Bezugszeichen 36 kennzeichnet in den Figuren 5-10 jeweils einen Außenbereich, welcher aus einem Verbundwerkstoff, vorzugsweise aus einem faserverstärkten Verbundwerkstoff, beispielsweise aus einem mit Glasfasern verstärkten Kunstharz, besteht. Das Bezugszeichen 38 kennzeichnet hingegen jeweils den wenigstens einen Innenbereich, welcher - zumindest abschnittsweise - von dem Außenbereich 36 umgeben ist.

Bei den bevorzugten Ausführungsbeispielen weisen die Verstärkungselemente 124a-124d, 224a-224d, 324a-324d vorzugsweise über ihre gesamte Länge hinweg eine konstante Querschnittsform auf. Auf diese Weise können die aus dem Verbundwerkstoff gebildeten Außenbereiche 36, und ggf. auch die entsprechenden Innenbereiche 38, die hohl oder ganz oder teilweise mit einem verbundwerkstofffreien festen Material gefüllt sein können, maschinell relativ einfach, zum Beispiel durch Extrudieren, gefertigt werden. Es kann - je nach Materialwahl - vorgesehen werden, den Außenbereich 36 und den wenigstens einen Innenbereich 38 gemeinsam in einem Arbeitsschritt herzustellen. Ein auf diese Weise hergestelltes Verstärkungselement 124a-124d, 224a-224d, 324a-324d muss dann nur noch auf das für die entsprechende Tür richtige Maß abgelängt werden.

Prinzipiell ist es nicht unbedingt nötig, in dem wenigstens einen Innenbereich 38 ein festes Material vorzusehen. Der wenigstens eine Innenbereich 38 kann auch nur mit Luft gefüllt sein. Aus Gründen der Isolationseigenschaften des Türrohlings 100, 200, 300, insbesondere im Hinblick auf Wärme und Schall, ist es jedoch vorteilhaft, festes Material in dem wenigstens einen Innenbereich 38 vorzusehen. Dieses Material kann zum Beispiel ein leichtes Holz oder ein Kunststoffschaum sein. Es muss nicht mit dem Außenbereich 36, etwa durch Klebung, fest verbunden sein, kann aber beispielsweise durch Klebung fest verbunden sein. Auch muss das Material in dem wenigstens einen Innenbereich 38 nicht zwingend formbeständig sein; es kann beispielsweise pastös sein oder aus einer Mehrzahl kleinerer, schüttfähiger Elemente, etwa Kugeln, bestehen.

Gegenüber einem länglichen Verstärkungselement mit kompaktem Querschnitt können die länglichen Verstärkungselemente 124a-124d, 224a-224d, 324a-324d mit den in den Figuren 5-10 dargestellten Querschnitten bei gleicher Menge an verwendetem Verbundwerkstoff größere Lasten, insbesondere Biegelasten, aufnehmen. Es ist somit möglich, mit dem erfindungsgemäßen Türrohling stabile und zugleich auch relativ leichte Türen herzustellen.

Figur 5 zeigt einen Querschnitt, welcher drei Bereiche aufweist, nämlich einen Außenbereich 36, der sich um den gesamten Umfang des Querschnitts erstreckt und eine Strebe in der Mitte aufweist, und zwei identisch ausgebildete Innenbereiche 38, die von dem Außenbereich 36 vollständig umschlossen sind.

Figur 6 zeigt einen im Vergleich zu Figur 5 abgewandelten Querschnitt, bei welchem der Außenbereich 36 die beiden Innenbereiche 38 nicht vollständig umschließt, sondern zu jeweils einer Seite hin offen ist. Somit weist der Außenbereich die Form eines Doppel-T-Trägers auf. Es wäre natürlich auch denkbar, dass der Außenbereich 36 nur einen der beiden Innenbereiche 38 teilweise umschließt und den anderen Innenbereich 38 dagegen vollständig umschließt.

Bei der in Figur 7 dargestellten Querschnittsform fehlt die mittlere, vertikale Strebe des Außenbereichs 36, so nur ein Innenbereich 38 gebildet wird, welcher relativ groß und vollständig von dem Außenbereich 36 umschlossen ist.

Die in Figur 8 dargestellte Querschnittsform entspricht im Wesentlichen der in Figur 7 dargestellten Querschnittsform, wobei der Außenbereich 36 jedoch zum rechten Rand hin offen ist. Somit weist der Außenbereich 36 eine C-Form auf.

Bei der in Figur 9 dargestellten Ausführungsform umfasst der Außenbereich 36 anstatt nur einer vertikalen Strebe - wie im Ausführungsbeispiel der Figur 5 - zwei vertikale Streben. Somit werden drei Innenbereiche 38 gebildet, die jeweils vollständig von dem Außenbereich 36 umgeben sind.

Bei der in Figur 10 dargestellten Querschnittsform umfasst der Außenbereich 36 neben einer vertikalen auch eine horizontale Strebe, so dass vier Innenbereiche 38 gebildet werden, die jeweils vollständig von dem Außenbereich 36 umgeben sind. Ferner unterscheidet sich diese Ausführungsform von den zuvor beschriebenen Ausführungsformen darin, dass der Gesamtquerschnitt - als auch der jeweilige Querschnitt der Innenbereiche 38 - quadratisch ausgebildet ist.

## Patentansprüche

1. Tür, umfassend einen Türrohling (100; 200; 300; 400) mit acetyliertem Holz, umfassend:
- einen Rahmen (120; 220; 320; 420), der sich um einen wesentlichen Umfang des Türrohlings (100; 200; 300; 400) herum erstreckt, und
- einen Kern (110; 210; 310; 410), der im Wesentlichen von dem Rahmen (120; 220; 320; 420) umgeben ist,
wobei ausschließlich der Rahmen (120; 220; 320; 420) des Türrohlings (100; 200; 300; 400), zumindest abschnittsweise, acetyliertes Holz aufweist,
wobei der Rahmen (120; 220; 320; 420) eine Mehrzahl von länglichen Elementen (122a-122e, 124a-124d; 222a-222e, 224a-224d; 322a-322f, 324a-324d; 422a-422d, 424b, 424d) umfasst, welche sich um den Kern (110; 210; 310; 410) herum erstrecken und damit den Umfang des Türrohlings (100; 200; 300; 400) im Wesentlichen definieren, wobei wenigstens eines der länglichen Elemente (122a-122d; 222a-222d; 322a-322d; 422a-422d) aus acetyliertem Holz besteht,
sowie eine Vorderseiten-Deckplatte (140), welche sich im Wesentlichen über die gesamte Vorderseite des Türrohlings (100; 200; 300; 400) erstreckt, oder/und eine Rückseiten-Deckplatte (142), welche sich im Wesentlichen über die gesamte Rückseite des Türrohlings (100; 200; 300; 400) erstreckt, wobei die Vorderseiten-Deckplatte (140) oder/und die Rückseiten-Deckplatte (142) aus acetyliertem Holz besteht, wobei die Vorderseiten-Deckplatte (140) oder/und die Rückseiten-Deckplatte (142) eine acetylierte MDF-Pressplatte ist.

2. Tür nach Anspruch 1, wobei der Türrohling (100; 200; 300; 400) im Wesentlichen rechtwinklig ausgebildet ist, mit einer Bandseite und einer sich dazu parallel erstreckenden Schlossseite, sowie mit einer Kopfseite und einer sich parallel dazu erstreckenden Bodenseite.

3. Tür nach Anspruch 2, wobei der Rahmen (30) des Türrohlings (100; 200; 300; 400) an all seinen vier Seiten acetyliertes Holz umfasst, so dass der Kern (110; 210; 310; 410) im Wesentlichen vollständig von acetyliertem Holz umgeben ist.

4. Tür nach Anspruch 2, wobei der Rahmen (120; 220; 320; 420) des Türrohlings (100; 200; 300; 400), zumindest abschnittsweise, ausschließlich an der Bandseite und/oder Schlossseite acetyliertes Holz umfasst.

5. Tür nach einem der vorhergehenden Ansprüche, wobei das acetylierte Holz des Rahmens (120; 220; 320; 420) Massivholz ist.

6. Tür nach Anspruch 1, wobei das wenigstens eine längliche Element (122a-122d; 222a-222d; 322a-322d; 422a-422d) aus acetyliertem Holz an einem äußeren Rand des Türrohlings (100; 200; 300; 400) angeordnet ist.

7. Tür nach Anspruch 6, wobei der Kern (110; 210; 310; 410) im Wesentlichen rechtwinklig ausgebildet ist, mit zwei seitlichen Rändern (114, 118; 214, 218; 314, 318; 414, 418), einem oberen Rand (116; 216; 316; 416) und einem unteren Rand (112; 212; 312; 412), wobei das wenigstens eine längliche Element (122a-122d; 222a-222d; 322a-322d; 422a-422d) aus acetyliertem Holz sich im Wesentlichen entweder parallel zu den beiden seitlichen Rändern (114, 118; 214, 218; 314, 318; 414, 418) des Kerns (110; 210; 310; 410) oder parallel zu dem oberen (116; 216; 316; 416) und dem unteren (112; 212; 312; 412) Rand des Kerns (110; 210; 310; 410) erstreckt und mindestens so lang wie die jeweiligen Ränder (112, 114, 116, 118; 212, 214, 216, 218; 312, 314, 316, 318; 412, 414, 416, 418) des Kerns (110; 210; 310; 410), zu denen es sich parallel erstreckt, ist.

8. Tür nach Anspruch 6 oder 7 und rückbezogen auf Anspruch 1, wobei das wenigstens eine längliche Element (122a-122d; 222a-222d; 322a-322d; 422a-422d) aus acetyliertem Holz, zumindest an der Bandseite oder/und an der Schlossseite, im Wesentlichen dieselbe Länge wie die diesem Element (122a-122d; 222a-222d; 322a-322d; 422a-422d) zugeordnete Seite des Türrohlings (100; 200; 300; 400) aufweist.

9. Tür nach einem der Ansprüche 1 und 6 bis 8, wobei die Mehrzahl von länglichen Elementen (122a-122e, 124a-124d; 222a-222e, 224a-224d; 322a-322f, 324a-324d; 422a-422d, 424b, 424d) wenigstens ein längliches Verstärkungselement (124a-124d; 224a-224d; 324a-324d; 424b, 424d) umfasst, welches, zumindest bereichsweise, aus einem Verbundwerkstoff, insbesondere aus einem faserverstärkten Verbundwerkstoff, gebildet ist.

10. Tür nach Anspruch 9, wobei der Kern (110; 210; 310; 410) im Wesentlichen um seinen gesamten Umfang herum von länglichen Verstärkungselementen (124a-124d; 224a-224d; 324a-324d; 424b, 424d) umgeben ist.

11. Tür nach Anspruch 9 oder 10, wobei zwischen wenigstens einem länglichen Element (122a-122d; 222a-222d; 322a-322d; 422a-422d) aus acetyliertem Holz und dem Kern (110; 210; 310; 410) jeweils ein längliches Verstärkungselement (124a-124d; 224a-224d; 324a-324d; 424b, 424d) angeordnet ist.

12. Tür nach einem der Ansprüche 9 bis 11, wobei das wenigstens eine längliche Verstärkungselement (124a-124d; 224a-224d; 324a-324d) einen Außenbereich (36) umfasst, welcher aus einem Verbundwerkstoff, insbesondere aus einem faserverstärkten Verbundwerkstoff, gebildet ist, und ferner wenigstens einen Innenbereich (38) umfasst, welcher frei von Verbundwerkstoff ist,
wobei der Außenbereich (36) - betrachtet in einer Schnittebene orthogonal zu der Längserstreckungsrichtung des wenigstens einen länglichen Verstärkungselements (124a-124d; 224a-224d; 324a-324d) - den wenigstens einen Innenbereich (38), zumindest abschnittsweise, umgibt.

13. Tür nach einem der vorhergehenden Ansprüche, wobei sich die länglichen Elemente (122a-122e, 124a-124d; 222a-222e, 224a-224d; 322a-322f, 324a-324d; 422a-422d, 424b, 424d), und vorzugsweise auch der Kern (110; 210; 310; 410), über die gesamte Dickenrichtung des Türrohlings (100; 200; 300; 400) erstrecken.

## Claims

1. Door, comprising a door blank (100; 200; 300; 400) with acetylated wood, comprising:
- a frame (120; 220; 320; 420) that extends around a significant extent of the door blank (100; 200; 300; 400), and
- a core (110; 210; 310; 410), which is essentially surrounded by the frame (120; 220; 320; 420),
wherein only the frame (120; 220; 320; 420) of the door blank (100; 200; 300; 400), at least in sections, has acetylated wood,
wherein the frame (120; 220; 320; 420) comprises a majority of elongated elements (122a-122e, 124a-124d; 222a-222e, 224a-224d; 322a-322f, 324a-324d; 422a-422d, 424b, 424d), which extend around the core (110; 210; 310; 410) and therefore essentially define the circumference of the door blank (100; 200; 300; 400), wherein at least one of the elongated elements (122a-122d; 222a-222d; 322a-322d; 422a-422d) is made of acetylated wood,
as well as a front side cover plate (140), which essentially extends across the entire front face of the door blank (100; 200; 300; 400), and/or a rear face cover plate (142), which essentially extends across the entire rear face of the door blank (100; 200; 300; 400), wherein the front side cover plate (140) and/or the rear side cover plate (142) is made of acetylated wood, wherein the front side cover plate (140) and/or the rear side cover plate (142) is an acetylated MDF press plate.

2. Door according to claim 1, wherein the door blank (100; 200; 300; 400) is designed essentially to be right-angled, with a hinge side and a lock side extending parallel thereto, as well as with a top side and a bottom side extending parallel thereto.

3. Door according to claim 2, wherein the frame (30) of the door blank (100; 200; 300; 400) comprises acetylated wood on all its four sides, so that the core (110; 210; 310; 410) is essentially fully surrounded by acetylated wood.

4. Door according to claim 2, wherein the frame (120; 220; 320; 420) of the door blank (100; 200; 300; 400), at least in sections, comprises acetylated wood on the hinge side and/or on the lock side.

5. Door according to one of the previous claims, wherein the acetylated wood of the frame (120; 220; 320; 420) is solid wood.

6. Door according to claim 1, wherein the at least one elongated element (122a-122d; 222a-222d; 322a-322d; 422a-422d) made of acetylated wood is arranged on the external edge of the door blank (100; 200; 300; 400).

7. Door according to claim 6, wherein the core (110; 210; 310; 410) is essentially designed to be right-angled, with two lateral edges (114, 118; 214, 218; 314, 318; 414, 418), a top edge (116; 216; 316; 416), and a bottom edge (112; 212; 312; 412), wherein the at least one elongated element (122a-122d; 222a-222d; 322a-322d; 422a-422d) made of acetylated wood extends essentially either parallel to the two lateral edges (114, 118; 214, 218; 314, 318; 414, 418) of the core (110; 210; 310; 410) or parallel to the top (116; 216; 316; 416) and the bottom (112; 212; 312; 412) edges of the core (110; 210; 310; 410) and is at least as long as the respective edges (112, 114, 116, 118; 212, 214, 216, 218; 312, 314, 316, 318; 412, 414, 416, 418) of the core (110; 210; 310; 410) to which it extends in parallel.

8. Door according to claim 6 or 7 and referring back to claim 1, wherein the at least one elongated element (122a-122d; 222a-222d; 322a-322d; 422a-422d) made of acetylated wood, at least on the hinge side and/or on the lock side, is essentially the same length as the side of the door blank (100; 200; 300; 400) associated with this element (122a-122d; 222a-222d; 322a-322d; 422a-422d).

9. Door according to claims 1 and 6 through 8, wherein the majority of elongated elements (122a-122e, 124a-124d; 222a-222e, 224a-224d; 322a-322f, 324a-324d; 422a-422d, 424b, 424d) comprises at least one elongated reinforcement element (124a-124d; 224a-224d; 324a-324d; 424b, 424d) which, at least in sections, is formed from a composite material - in particular, from a fiber-reinforced composite material.

10. Door according to claim 9, wherein the core (110; 210; 310; 410) is essentially surrounded around its entire circumference by elongated reinforcement elements (124a-124d; 224a-224d; 324a-324d; 424b, 424d).

11. Door according to claim 9 or 10, wherein an elongated reinforcement element (124a-124d; 224a-224d; 324a-324d; 424b, 424d) is arranged respectively between at least one elongated element (122a-122d; 222a-222d; 322a-322d; 422a-422d) made from acetylated wood and the core (110; 210; 310; 410).

12. Door according to claims 9 through 11, wherein the at least one elongated reinforcement element (124a-124d; 224a-224d; 324a-324d) comprises an exterior (36) which is formed from a composite material - in particular, from a fiber-reinforced composite material - and also comprises at least one interior (38) which is free of composite material,
wherein the exterior (36) - viewed in a sectional plane orthogonal to the direction of longitudinal extension of the at least one elongated reinforcement element (124a-124d; 224a-224d; 324a-324d) - surrounds the at least one interior (38), at least in sections.

13. Door according to one of the preceding claims, wherein the elongated elements (122a-122e, 124a-124d; 222a-222e, 224a-224d; 322a-322f, 324a-324d; 422a-422d, 424b, 424d), and preferably the core (110; 210; 310; 410) as well, extend across the entire direction of thickness of the door blank (100; 200; 300; 400).

## Revendications

1. Porte, comprenant une ébauche de porte (100; 200; 300; 400) avec du bois acétylé, comprenant :
- un cadre (120 ; 220 ; 320 ; 420) qui s'étend autour d'une périphérie substantielle de l'ébauche de porte (100 ; 200 ; 300 ; 400) et
- une âme (110 ; 210 ; 310 ; 410) qui est entourée pour l'essentiel par le cadre (120 ; 220 ; 320 ; 420),
dans laquelle exclusivement le cadre (120 ; 220 ; 320 ; 420) de l'ébauche de porte (100 ; 200 ; 300 ; 400) présente au moins par sections du bois acétylé,
dans laquelle le cadre (120 ; 220 ; 320 ; 420) comprend une pluralité d'éléments oblongs (122a-122e, 124a-124d; 222a-222e, 224a-224d ; 322a-322f, 324a-324d ; 422a-422d, 424b, 424d) qui s'étendent autour de l'âme (110 ; 210 ; 310 ; 410) et définissent ainsi pour l'essentiel la périphérie de l'ébauche de porte (100 ; 200 ; 300 ; 400), dans laquelle au moins l'un des éléments oblongs (122a-122d ; 222a-222d ; 322a-322d ; 422a-422d) se compose de bois acétylé,
ainsi qu'une plaque de recouvrement côté avant (140) qui s'étend substantiellement sur le côté avant entier de l'ébauche de porte (100 ; 200 ; 300 ; 400) et/ou une plaque de recouvrement côté arrière (142) qui s'étend substantiellement sur le côté arrière entier de l'ébauche de porte (100 ; 200 ; 300 ; 400), dans laquelle la plaque de recouvrement côté avant (140) et/ou la plaque de recouvrement côté arrière (142) se composent de bois acétylé, dans laquelle la plaque de recouvrement côté avant (140) et/ou la plaque de recouvrement côté arrière (142) sont une plaque de pressage MDF acétylée.

2. Porte selon la revendication 1, dans laquelle l'ébauche de porte (100 ; 200 ; 300 ; 400) est réalisée sensiblement à angles droits, avec un côté de bande et un côté de serrure s'étendant parallèlement à celui-ci, ainsi qu'avec un côté de tête et un côté de fond s'étendant parallèlement à celui-ci.

3. Porte selon la revendication 2, dans laquelle le cadre (30) de l'ébauche de porte (100 ; 200 ; 300 ; 400) comprend du bois acétylé sur tous ses quatre côtés de sorte que l'âme (110 ; 210 ; 310 ; 410) soit entourée substantiellement complètement par du bois acétylé.

4. Porte selon la revendication 2, dans laquelle le cadre (120 ; 220 ; 320 ; 420) de l'ébauche de porte (100 ; 200 ; 300 ; 400) comprend du bois acétylé au moins par sections exclusivement sur le côté de bande et/ou le côté de serrure.

5. Porte selon l'une quelconque des revendications précédentes, dans laquelle le bois acétylé du cadre (120 ; 220 ; 320 ; 420) est du bois massif.

6. Porte selon la revendication 1, dans laquelle l'au moins un élément oblong (122a-122d ; 222a-222d ; 322a-322d ; 422a-422d) en bois acétylé est agencé sur un bord extérieur de l'ébauche de porte (100 ; 200 ; 300 ; 400).

7. Porte selon la revendication 6, dans laquelle l'âme (110 ; 210 ; 310 ; 410) est réalisée substantiellement à angles droits, avec deux bords latéraux (114, 118 ; 214, 218 ; 314 ; 318, 414, 418), un bord supérieur (116 ; 216 ; 316 ; 416) et un bord inférieur (112 ; 212 ; 312 ; 412), dans laquelle l'au moins un élément oblong (122a-122d ; 222a-222d ; 322a-322d ; 422a-422d) en bois acétylé s'étend pour l'essentiel parallèlement aux deux bords latéraux (114, 118 ; 214, 218 ; 314, 318 ; 414, 418) de l'âme (110 ; 210 ; 310 ; 410) ou parallèlement au bord supérieur (116 ; 216 ; 316 ; 416) et au bord inférieur (112 ; 212 ; 312 ; 412) de l'âme (110 ; 210 ; 310 ; 410) et est au moins aussi long que les bords (112, 114, 116, 118 ; 212, 214, 216, 218 ; 312, 314, 316, 318 ; 412, 414, 416, 418) respectifs de l'âme (110 ; 210 ; 310 ; 410), par rapport auxquels il s'étend en parallèle.

8. Porte selon la revendication 6 ou 7 en dépendance à la revendication 1, dans laquelle l'au moins un élément oblong (122a-122d ; 222a-222d ; 322a-322d ; 422a-422d) en bois acétylé présente, au moins sur le côté de bande et/ou sur le côté de serrure, sensiblement la même longueur que le côté tourné vers cet élément (122a-122d ; 222a-222d ; 322a-322d ; 422a-422d) de l'ébauche de porte (100 ; 200 ; 300 ; 400).

9. Porte selon l'une quelconque des revendications 1 et 6 à 8, dans laquelle la pluralité d'éléments oblongs (122a-122e ; 124a-124d ; 222a-222e ; 224a-224d ; 322a-322f ; 324a-324d ; 422a-422d, 424b, 424d) comprennent au moins un élément de renforcement oblong (124a-124d ; 224a-224d ; 324a-324d ; 424b, 424d) qui est formé au moins par endroits en un matériau composite, en particulier en un matériau composite renforcé de fibres.

10. Porte selon la revendication 9, dans laquelle l'âme (110 ; 210 ; 310 ; 410) est entourée, substantiellement autour de sa périphérie entière, d'éléments de renforcement oblongs (124a-124d ; 224a-224d ; 324a-324d ; 424b, 424d).

11. Porte selon la revendication 9 ou 10, dans laquelle respectivement un élément de renforcement oblong (124a-124d ; 224a-224d ; 324a-324d ; 424b, 424d) est agencé entre au moins un élément oblong (122a-122d ; 222a-222d ; 322a-322d ; 422a-422d) en bois acétylé et l'âme (110 ; 210 ; 310 ; 410).

12. Porte selon l'une quelconque des revendications 9 à 11, dans laquelle l'au moins un élément de renforcement oblong (124a-124d ; 224a-224d ; 324a-324d) comprend une zone extérieure (36) qui est formée d'un matériau composite, en particulier d'un matériau composite renforcé de fibres, et comprend en outre au moins une zone intérieure (38) qui est exempte de matériau composite,
dans laquelle la zone extérieure (36), vue dans un plan de coupe orthogonalement au sens d'étendue longitudinale de l'au moins un élément de renforcement oblong (124a-124d ; 224a-224d ; 324a-324d), entoure l'au moins une zone intérieure (38) au moins par sections.

13. Porte selon l'une quelconque des revendications précédentes, dans laquelle les éléments oblongs (122a-122e, 124a-124d ; 222a-222e, 224a-224d ; 322a-322f, 324a-324d ; 422a-422d, 424b, 424d) et de préférence aussi l'âme (110 ; 210 ; 310 ; 410) s'étendent sur le sens entier d'épaisseur de l'ébauche de porte (100 ; 200 ; 300 ; 400).
